(19) Europäisches Patentamt
European Patent Office
Office européen des brevets

(11) **EP 3 512 039 A1**

(12) **EUROPEAN PATENT APPLICATION**

(43) Date of publication:
**17.07.2019 Bulletin 2019/29**

(21) Application number: **18151190.8**

(22) Date of filing: **11.01.2018**

(51) Int Cl.:
*H01Q 3/40* $^{(2006.01)}$  *H01Q 1/24* $^{(2006.01)}$
*H01Q 21/06* $^{(2006.01)}$  *H01Q 25/00* $^{(2006.01)}$
*H04B 7/06* $^{(2006.01)}$

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Deutsche Telekom AG**
**53113 Bonn (DE)**

(72) Inventor: **Wannemacher, Georg**
**66386 St. Ingbert (DE)**

(74) Representative: **Patentship**
**Patentanwaltsgesellschaft mbH**
**Elsenheimerstraße 65**
**80687 München (DE)**

Remarks:
Amended claims in accordance with Rule 137(2) EPC.

(54) **A BEAMFORMING ANTENNA SYSTEM COMPRISING A CYLINDRICAL BEAMFORMING ANTENNA**

(57) The invention relates to a beamforming antenna system (100). The beamforming antenna system (100) comprises a cylindrical beamforming antenna (101) having a cylindrical surface and an array (102) of antenna elements. The beamforming antenna system (100) further comprises a driving circuit (103) being configured to drive a subarray of the array (102) of antenna elements to generate a spatially directed transmission beam. The driving circuit (103) comprises a storage (105) being configured to store reference phase shift values for generating spatially directed transmission beams using a planar beamforming antenna. The driving circuit (103) further comprises a processor (107) being configured to select a subset of the pre-stored reference phase shift values, to adapt the selected subset of pre-stored reference phase shift values to the cylindrical distribution of the array (102) of antenna elements of the cylindrical beamforming antenna (101) to obtain adapted phase shift values, and to drive the subarray of the array (102) of antenna elements of the cylindrical beamforming antenna (101) using the adapted phase shift values to generate the spatially directed transmission beam.

Fig. 1a

EP 3 512 039 A1

Fig. 1b

**Description**

TECHNICAL FIELD

The present invention relates to the field of beamforming antennas, in particular for base stations in fifth-generation (5G) mobile communication networks.

TECHNICAL BACKGROUND

Fifth-generation (5G) mobile communication networks are assumed to use planar beamforming antennas for massive multiple-input multiple-output (MIMO) communication, wherein such planar beamforming antennas may e.g. comprise 128 antenna elements for generating a spatially directed transmission beam. By applying phase shifts to a subarray of such antenna elements, the spatially directed transmission beam may be generated. The corresponding phase shift values may e.g. be defined by a code book, which may be standardized by 5G standardization bodies, such as the 3GPP.

Planar beamforming antennas, however, have a maximum coverage angle of 180°. In order to provide a 360° coverage angle around a base station, at least three planar beamforming antennas have to be used. This may, however, result in an increased interference between spatially directed transmission beams of the planar beamforming antennas.

SUMMARY

It is an object of the invention to provide a beamforming antenna system having a coverage angle of 360° which mitigates the aforementioned drawbacks.

This object is achieved by the features of the independent claims. Further implementation forms are apparent from the dependent claims, the description and the figures.

The invention is based on the finding that beamforming approaches for planar beamforming antennas may be adapted to cylindrical beamforming antennas by adapting respective reference phase shift values associated with a planar beamforming antenna to the cylindrical distribution of antenna elements of a cylindrical beamforming antenna.

The beamforming antenna system is particularly suited for base stations to be used for multiple-input multiple-output (MIMO) communication with a user equipment in fifth-generation (5G) mobile communication networks. Furthermore, the beamforming antenna system may be applied in the context of the new-radio (NR) air interface.

According to a first aspect, the invention relates to a beamforming antenna system. The beamforming antenna system comprises a cylindrical beamforming antenna having a cylindrical surface and an array of antenna elements being arranged along the cylindrical surface. The beamforming antenna system further comprises a driving circuit being configured to drive a subarray of the array of antenna elements to generate a spatially directed transmission beam. The driving circuit comprises a storage being configured to store reference phase shift values for generating spatially directed transmission beams using a planar beamforming antenna having a planar distributed array of antenna elements. The driving circuit further comprises a processor being configured to select a subset of the pre-stored reference phase shift values for generating the spatially directed transmission beam, to adapt the selected subset of pre-stored reference phase shift values to the cylindrical distribution of the array of antenna elements of the cylindrical beamforming antenna to obtain adapted phase shift values, and to drive the subarray of the array of antenna elements of the cylindrical beamforming antenna using the adapted phase shift values to generate the spatially directed transmission beam.

In an embodiment, the pre-stored reference phase shift values are part of a pre-stored code book, in particular a pre-stored planar code book, associated with the planar beamforming antenna. The pre-stored code book may be stored in the storage. The pre-stored code book, in particular the pre-stored planar code book, may be standardized by a 5G standardization body, such as the 3GPP. Thus, conformity with the 5G standard can be realized.

The pre-stored code book may e.g. indicate a respective pre-stored reference phase shift value for each respective antenna element of the planar beamforming antenna associated with a specific beam direction. The pre-stored code book may be represented in form of a look-up table. For an exemplary 4x2 planar beamforming antenna, the pre-stored code book may include for an exemplary beam direction to the front the following entries: [1,1] = -25°, [2,1] = -10°, [3,1] = +10°, [4,1] = +25°, [1,2] = -25°, [2,2] = -10°, [3,2] = +10°, and [4,2] = +25°.

In an embodiment, the processor is configured to perform a spatial coordinate transformation to adapt the selected subset of the pre-stored reference phase shift values to the cylindrical distribution of the array of antenna elements of the cylindrical beamforming antenna. Thus, spatial relationships can efficiently be exploited.

In an embodiment, the spatial coordinate transformation is a Cartesian-to-Cylindrical coordinate transformation. Thus, spatial relationships between the planar distribution and the cylindrical distribution can efficiently be exploited.

In an embodiment, the driving circuit further comprises an array of phase shifters associated with the array of antenna elements of the cylindrical beamforming antenna, wherein the processor is configured to control the array of phase shifters using the adapted phase shift values. Thus, the antenna elements can efficiently be driven.

In an embodiment, each antenna element of the array of antenna elements is a patch antenna. Thus, the antenna elements can efficiently be implemented.

In an embodiment, the antenna elements of the array of antenna elements are equally spaced along the cylindrical surface. Thus, the adaption of the selected subset of pre-stored reference phase shift values to the cylindrical distribution can efficiently be realized.

In an embodiment, the array of antenna elements is a phased array. Thus, the spatially directed transmission beam can efficiently be steered.

According to a second aspect, the invention relates to a base station for communicating with a user equipment over a communication network. The base station comprises the beamforming antenna system according to the first aspect of the invention, wherein the base station is configured to communicate with the user equipment via the spatially directed transmission beam of the beamforming antenna system.

In an embodiment, the driving circuit of the beamforming antenna system further comprises an interface configured to receive a beamforming indicator from the user equipment, the beamforming indicator indicating a direction of the spatially directed transmission beam. Thus, the adaption of the selected subset of pre-stored reference phase shift values to the cylindrical distribution can be performed such that the spatially directed transmission beam is directed towards the indicated direction.

In an embodiment, the interface is configured to receive a rank indicator from the user equipment, wherein the rank indicator is associated with the planar beamforming antenna, and wherein the rank indicator comprises the beamforming indicator. Thus, conformity with the 5G standard can be realized.

In an embodiment, the base station is an eNodeB of the communication network. Thus, standardized infrastructure components can efficiently be used.

In an embodiment, the communication network is a fifth-generation, 5G, mobile communication network. Thus, standardized procedures can efficiently be used.

According to a third aspect, the invention relates to a method for operating a beamforming antenna system. The beamforming antenna system comprises a cylindrical beamforming antenna, and a driving circuit comprising a storage and a processor. The cylindrical beamforming antenna has a cylindrical surface and an array of antenna elements being arranged along the cylindrical surface. The driving circuit is configured to drive a subarray of the array of the antenna elements to generate a spatially directed transmission beam. The storage is configured to store reference phase shift values for generating spatially directed transmission beams using a planar beamforming antenna having a planar distributed array of antenna elements. The method comprises selecting, by the processor, a subset of the pre-stored reference phase shift values for generating the spatially directed transmission beam, adapting, by the processor, the selected subset of pre-stored reference phase shift values to the cylindrical distribution of the antenna elements of the array of the cylindrical beamforming antenna to obtain adapted phase shift values, and driving, by the processor, the subarray of the array of the antenna elements of the cylindrical beamforming antenna using the adapted phase shift values to generate the spatially directed transmission beam.

The method may be performed by the beamforming antenna system. Further features of the method may directly result from the features and/or the functionality of the beamforming antenna system.

According to a fourth aspect, the invention relates to a computer program comprising a program code for performing the method according to the third aspect of the invention, when executed by a processor.

The invention can be implemented in hardware and/or software.

BRIEF DESCRIPTION OF THE FIGURES

Further embodiments of the invention will be described with respect to the following figures, in which:

Fig. 1a    shows a schematic diagram of a beamforming antenna system;

Fig. 1b    shows a schematic diagram of a beamforming antenna system;

Fig. 2     shows a schematic diagram of a base station comprising a beamforming antenna system; and

Fig. 3     shows a schematic diagram of a method for operating a beamforming antenna system.

DETAILED DESCRIPTION OF THE FIGURES

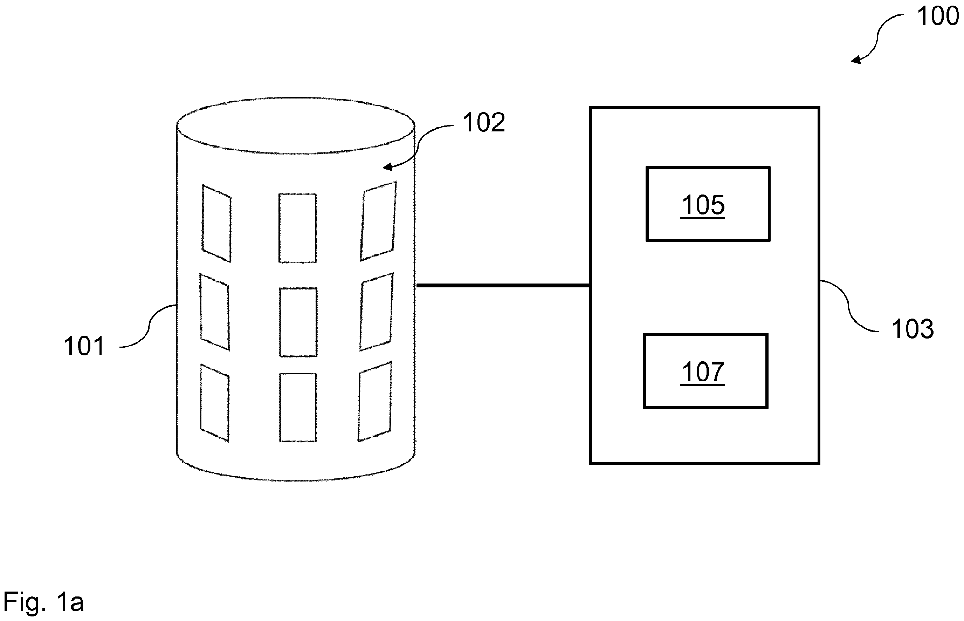

Fig. 1a shows a schematic diagram of a beamforming antenna system 100. The beamforming antenna system 100 comprises a cylindrical beamforming antenna 101 having a cylindrical surface and an array 102 of antenna elements being arranged along the cylindrical surface. The beamforming antenna system 100 further comprises a driving circuit 103 being configured to drive a subarray of the array 102 of antenna elements to generate a spatially directed transmission beam. The driving circuit 103 comprises a storage 105 being configured to store reference phase shift values for generating spatially directed transmission beams using a planar beamforming antenna having a planar distributed array of antenna elements. The driving circuit 103 further comprises a processor 107 being configured to select a subset of the pre-stored reference phase shift values for generating the spatially directed transmission beam, to adapt the selected subset of pre-stored reference phase shift values to the cylindrical distribution of the array 102 of antenna elements of the cylindrical beamforming antenna

101 to obtain adapted phase shift values, and to drive the subarray of the array 102 of antenna elements of the cylindrical beamforming antenna 101 using the adapted phase shift values to generate the spatially directed transmission beam.

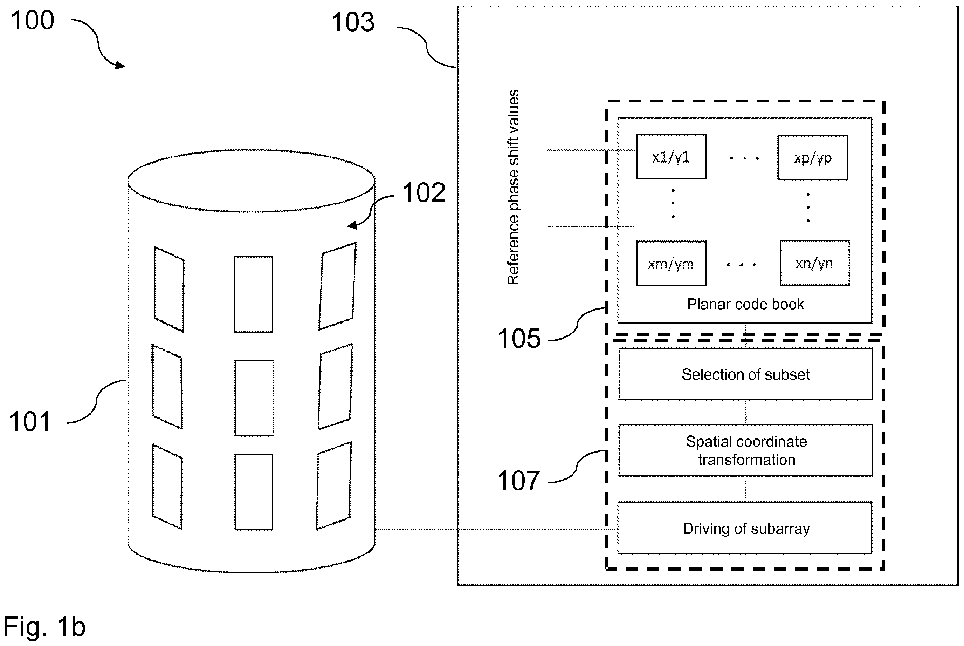

Fig. 1b shows a schematic diagram of a beamforming antenna system 100. The beamforming antenna system 100 comprises a cylindrical beamforming antenna 101 having a cylindrical surface and an array 102 of antenna elements being arranged along the cylindrical surface. The beamforming antenna system 100 further comprises a driving circuit 103 being configured to drive a subarray of the array 102 of antenna elements to generate a spatially directed transmission beam. The driving circuit 103 comprises a storage 105 being configured to store reference phase shift values for generating spatially directed transmission beams using a planar beamforming antenna having a planar distributed array of antenna elements. The driving circuit 103 further comprises a processor 107 being configured to select a subset of the pre-stored reference phase shift values for generating the spatially directed transmission beam, to adapt the selected subset of pre-stored reference phase shift values to the cylindrical distribution of the array 102 of antenna elements of the cylindrical beamforming antenna 101 to obtain adapted phase shift values, and to drive the subarray of the array 102 of antenna elements of the cylindrical beamforming antenna 101 using the adapted phase shift values to generate the spatially directed transmission beam.

The pre-stored reference phase shift values may e.g. be part of a pre-stored code book used for communication within fifth-generation (5G) mobile communication networks. Thus, interoperability with the 5G-standard can be achieved.

The pre-stored reference phase shift values within the pre-stored code book are adapted to the cylindrical distribution of antenna elements of the cylindrical beamforming antenna 101. For generating an exemplary spatially directed transmission beam corresponding to an angle of 45° to the left of a planar distribution, the antenna elements of the cylindrical beamforming antenna 101 may be driven such that the spatially directed transmission beam at the angle of 45° to the left is generated. Regarding the cylindrical distribution of antenna elements, only the antenna elements may e.g. be driven which are already substantially arranged or directed towards the desired direction of the spatially directed transmission beam.

The adapted phase shift values are therefore different with regard to the reference phase shift values. Furthermore, the coverage angle of each individual antenna element may be increased. This may allow using simpler antenna elements such as patch antennas.

For this purpose, a spatial coordinate transformation, in particular a Cartesian-to-Cylindrical coordinate transformation, may be performed to adapt the selected subset of the pre-stored reference phase shift values to the cylindrical distribution of the array 102 of antenna elements of the cylindrical beamforming antenna. The spatial coordinate transformation may be based on the following relationships:

$$x = r \cos \varphi,$$

$$y = r \sin \varphi$$

$$z = h$$

The spatial coordinate transformation may thus map the planar code book associated with a planar beamforming antenna using Cartesian coordinates onto cylindrical coordinates.

The approach may e.g. be applied when using frequency-division-duplex (FDD) transmission. A user equipment may e.g. inform a base station, which comprises the beamforming antenna system 100, about the desired transmission beam, e.g. using a rank indicator comprising a beamforming indicator.

By adapting the pre-stored reference phase shift values to the cylindrical distribution of antenna elements of the cylindrical beamforming antenna 101, the user equipment may not be aware of any different behavior with regard to a planar distribution of antenna elements. The user equipment may transmit an unmodified rank indicator associated with a planar distribution of antenna elements to the base station. Thus, interoperability with the 5G-standard can be achieved.

The number of antenna elements of the cylindrical beamforming antenna 101 may be identical to the number of antenna elements of the planar beamforming antenna. The planar code book may directly be used, wherein only a subset of antenna elements of the cylindrical beamforming antenna 101 may be used for beamforming. In this case, less antenna elements may be available for generating a spatially directed transmission beam in a specific direction than in the planar case.

Alternatively, the number of antenna elements of the cylindrical beamforming antenna 101 may be greater than the number of antenna elements of the planar beamforming antenna. In particular, the planar beamforming antenna may be mapped onto the cylindrical surface multiple times. For a given aperture of the cylindrical beamforming antenna 101, the same number of antenna elements as in the planar distribution may be used. Only these antenna elements may e.g. be used for beamforming.

The beamforming antenna system 100 allows for a coverage angle of 360° such that multiple planar beamforming antennas may be omitted.

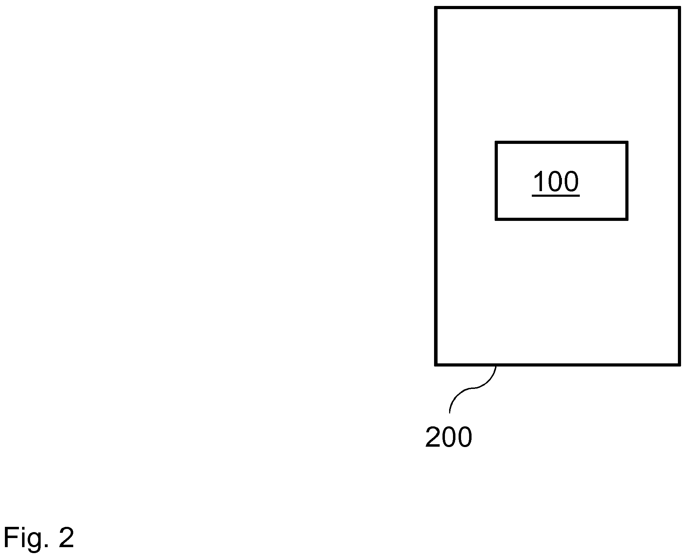

Fig. 2 shows a schematic diagram of a base station 200 for communicating with a user equipment over a communication network. The base station 200 comprises the beamforming antenna system 100.

The base station 200 is configured to communicate with the user equipment via the spatially directed transmission beam of the beamforming antenna system 100.

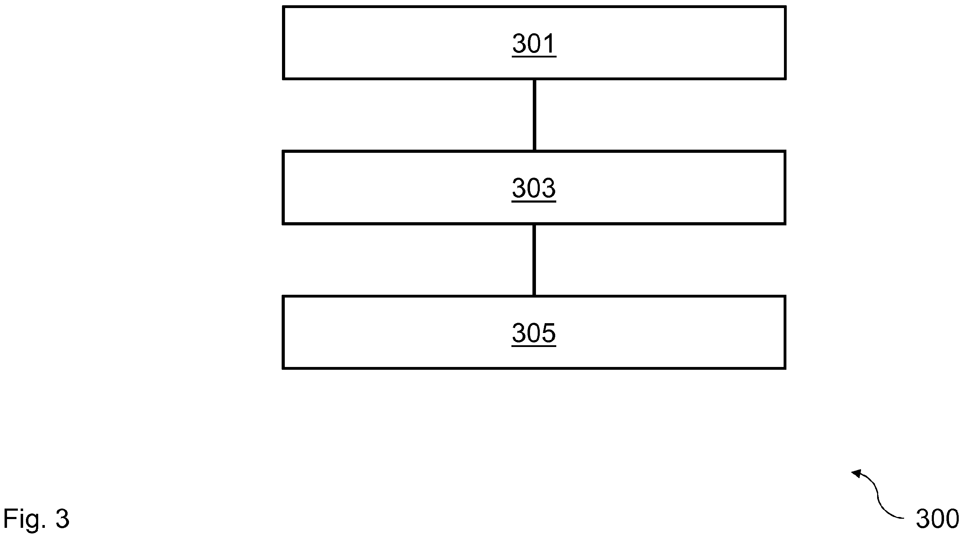

Fig. 3 shows a schematic diagram of a method 300 for operating a beamforming antenna system. The beamforming antenna system comprises a cylindrical beamforming antenna, and a driving circuit comprising a storage and a processor. The cylindrical beamforming antenna has a cylindrical surface and an array of antenna elements being arranged along the cylindrical surface. The driving circuit is configured to drive a subarray of the array of the antenna elements to generate a spatially directed transmission beam. The storage is configured to store reference phase shift values for generating spatially directed transmission beams using a planar beamforming antenna having a planar distributed array of antenna elements. The method 300 comprises selecting 301, by the processor, a subset of the pre-stored reference phase shift values for generating the spatially directed transmission beam, adapting 303, by the processor, the selected subset of pre-stored reference phase shift values to the cylindrical distribution of the antenna elements of the array of the cylindrical beamforming antenna to obtain adapted phase shift values, and driving 305, by the processor, the subarray of the array of the antenna elements of the cylindrical beamforming antenna using the adapted phase shift values to generate the spatially directed transmission beam.

Although the present invention and its advantages have been described in detail, it should be understood that various changes, substitutions and alterations can be made herein without departing from the spirit and scope of the invention as defined by the appended claims.

REFERENCE SIGNS

| 100 | Beamforming antenna system |
| 101 | Cylindrical beamforming antenna |
| 102 | Array of antenna elements |
| 103 | Driving circuit |
| 105 | Storage |
| 107 | Processor |
| 200 | Base station |
| 300 | Method for operating a beamforming antenna system |
| 301 | Selecting |
| 303 | Adapting |
| 305 | Driving |

**Claims**

1. A beamforming antenna system (100), comprising:

   a cylindrical beamforming antenna (101) having a cylindrical surface and an array (102) of antenna elements being arranged along the cylindrical surface;
   a driving circuit (103) being configured to drive a subarray of the array (102) of antenna elements to generate a spatially directed transmission beam, wherein the driving circuit (103) comprises:

   a storage (105) being configured to store reference phase shift values for generating spatially directed transmission beams using a planar beamforming antenna having a planar distributed array of antenna elements; and
   a processor (107) being configured to select a subset of the pre-stored reference phase shift values for generating the spatially directed transmission beam, to adapt the selected subset of pre-stored reference phase shift values to the cylindrical distribution of the array (102) of antenna elements of the cylindrical beamforming antenna (101) to obtain adapted phase shift values, and to drive the subarray of the array (102) of antenna elements of the cylindrical beamforming antenna (101) using the adapted phase shift values to generate the spatially directed transmission beam.

2. The beamforming antenna system (100) of claim 1, wherein the pre-stored reference phase shift values are part of a pre-stored code book, in particular a pre-stored planar code book, associated with the planar beamforming antenna.

3. The beamforming antenna system (100) of any one of the preceding claims, wherein the processor (107) is configured to perform a spatial coordinate transformation to adapt the selected subset of the pre-stored reference phase shift values to the cylindrical distribution of the array (102) of antenna elements of the cylindrical beamforming antenna (101).

4. The beamforming antenna system (100) of claim 3, wherein the spatial coordinate transformation is a Cartesian-to-Cylindrical coordinate transformation.

5. The beamforming antenna system (100) of any one of the preceding claims, wherein the driving circuit (103) further comprises:

   an array of phase shifters associated with the array (102) of antenna elements of the cylindrical beamforming antenna (101);

wherein the processor (107) is configured to control the array of phase shifters using the adapted phase shift values.

6.   The beamforming antenna system (100) of any one of the preceding claims, wherein each antenna element of the array (102) of antenna elements is a patch antenna.

7.   The beamforming antenna system (100) of any one of the preceding claims, wherein the antenna elements of the array (102) of antenna elements are equally spaced along the cylindrical surface.

8.   The beamforming antenna system (100) of any one of the preceding claims, wherein the array (102) of antenna elements is a phased array.

9.   A base station (200) for communicating with a user equipment over a communication network, the base station (200) comprising:

the beamforming antenna system (100) of any one of the claims 1 to 8;
wherein the base station (200) is configured to communicate with the user equipment via the spatially directed transmission beam of the beamforming antenna system (100).

10.   The base station (200) of claim 9, wherein the driving circuit (103) of the beamforming antenna system (100) further comprises:

an interface configured to receive a beamforming indicator from the user equipment, the beamforming indicator indicating a direction of the spatially directed transmission beam.

11.   The base station (200) of claim 10, wherein the interface is configured to receive a rank indicator from the user equipment, wherein the rank indicator is associated with the planar beamforming antenna, and wherein the rank indicator comprises the beamforming indicator.

12.   The base station (200) of any one of the claims 9 to 11, wherein the base station (200) is an eNodeB of the communication network.

13.   The base station (200) of any one of the claims 9 to 12, wherein the communication network is a fifth-generation, 5G, mobile communication network.

14.   A method (300) for operating a beamforming antenna system (100), the beamforming antenna system (100) comprising a cylindrical beamforming antenna (101), and a driving circuit (103) comprising a storage (105) and a processor (107), the cylindrical beamforming antenna (101) having a cylindrical surface and an array (102) of antenna elements being arranged along the cylindrical surface, the driving circuit (103) being configured to drive a subarray of the array of the antenna elements to generate a spatially directed transmission beam, the storage (105) being configured to store reference phase shift values for generating spatially directed transmission beams using a planar beamforming antenna having a planar distributed array of antenna elements, the method (300) comprising:

selecting (301), by the processor (107), a subset of the pre-stored reference phase shift values for generating the spatially directed transmission beam;
adapting (303), by the processor (107), the selected subset of pre-stored reference phase shift values to the cylindrical distribution of the antenna elements of the array of the cylindrical beamforming antenna (101) to obtain adapted phase shift values; and
driving (305), by the processor (107), the subarray of the array of the antenna elements of the cylindrical beamforming antenna (101) using the adapted phase shift values to generate the spatially directed transmission beam.

15.   A computer program comprising a program code for performing the method (300) of claim 14, when executed by a processor (107).

**Amended claims in accordance with Rule 137(2) EPC.**

1.   A beamforming antenna system (100), comprising:

a cylindrical beamforming antenna (101) having a cylindrical surface and an array (102) of antenna elements being arranged along the cylindrical surface;
a driving circuit (103) being configured to drive a subarray of the array (102) of antenna elements to generate a spatially directed transmission beam, wherein the driving circuit (103) comprises:

a storage (105) being configured to store reference phase shift values for generating spatially directed transmission beams using a planar beamforming antenna having a planar distributed array of antenna elements, and a pre-stored code book associated with the planar beamforming antenna, wherein the pre-stored reference phase shift values are part of the pre-stored code book; and

a processor (107) being configured to select a subset of the pre-stored reference phase shift values for generating the spatially directed transmission beam, to adapt the selected subset of pre-stored reference phase shift values to the cylindrical distribution of the array (102) of antenna elements of the cylindrical beamforming antenna (101) to obtain adapted phase shift values, and to drive the subarray of the array (102) of antenna elements of the cylindrical beamforming antenna (101) using the adapted phase shift values to generate the spatially directed transmission beam.

2. The beamforming antenna system (100) of claim 1, wherein the pre-stored code book is a pre-stored planar code book.

3. The beamforming antenna system (100) of any one of the preceding claims, wherein the processor (107) is configured to perform a spatial coordinate transformation to adapt the selected subset of the pre-stored reference phase shift values to the cylindrical distribution of the array (102) of antenna elements of the cylindrical beamforming antenna (101).

4. The beamforming antenna system (100) of claim 3, wherein the spatial coordinate transformation is a Cartesian-to-Cylindrical coordinate transformation.

5. The beamforming antenna system (100) of any one of the preceding claims, wherein the driving circuit (103) further comprises:

an array of phase shifters associated with the array (102) of antenna elements of the cylindrical beamforming antenna (101);

wherein the processor (107) is configured to control the array of phase shifters using the adapted phase shift values.

6. The beamforming antenna system (100) of any one of the preceding claims, wherein each antenna element of the array (102) of antenna elements is a patch antenna.

7. The beamforming antenna system (100) of any one of the preceding claims, wherein the antenna elements of the array (102) of antenna elements are equally spaced along the cylindrical surface.

8. The beamforming antenna system (100) of any one of the preceding claims, wherein the array (102) of antenna elements is a phased array.

9. A base station (200) for communicating with a user equipment over a communication network, the base station (200) comprising:

the beamforming antenna system (100) of any one of the claims 1 to 8;

wherein the base station (200) is configured to communicate with the user equipment via the spatially directed transmission beam of the beamforming antenna system (100).

10. The base station (200) of claim 9, wherein the driving circuit (103) of the beamforming antenna system (100) further comprises:

an interface configured to receive a beamforming indicator from the user equipment, the beamforming indicator indicating a direction of the spatially directed transmission beam.

11. The base station (200) of claim 10, wherein the interface is configured to receive a rank indicator from the user equipment, wherein the rank indicator is associated with the planar beamforming antenna, and wherein the rank indicator comprises the beamforming indicator.

12. The base station (200) of any one of the claims 9 to 11, wherein the base station (200) is an eNodeB of the communication network.

13. The base station (200) of any one of the claims 9 to 12, wherein the communication network is a fifth-generation, 5G, mobile communication network.

14. A method (300) for operating a beamforming antenna system (100), the beamforming antenna system (100) comprising a cylindrical beamforming antenna (101), and a driving circuit (103) comprising a storage (105) and a processor (107), the cylindrical beamforming antenna (101) having a cylindrical surface and an array (102) of antenna elements being arranged along the cylindrical surface, the driving circuit (103) being configured to drive a subarray of the array of the antenna elements to generate a spatially directed transmission beam, the storage (105) being configured to store reference phase shift values for generating spatially directed transmission beams using a planar beamforming antenna having a planar distributed array of antenna elements, and a pre-stored code book associated with the planar beamforming antenna, wherein the pre-stored reference phase shift values are part of the pre-stored code book, the method (300) comprising:

selecting (301), by the processor (107), a subset of the pre-stored reference phase shift values for generating the spatially directed transmission beam;

adapting (303), by the processor (107), the selected subset of pre-stored reference phase shift values to the cylindrical distribution of the antenna elements of the array of the cylindrical beamforming antenna (101) to obtain adapted phase shift values; and

driving (305), by the processor (107), the subarray of the array of the antenna elements of the cylindrical beamforming antenna (101) using the adapted phase shift values to generate the spatially directed transmission beam.

15. A computer program comprising a program code for performing the method (300) of claim 14, when executed by a processor (107).

Fig. 1a

EP 3 512 039 A1

Fig. 1b

EP 3 512 039 A1

100

200

Fig. 2

Fig. 3

301

303

305

300

Europäisches
Patentamt
European
Patent Office
Office européen
des brevets

# EUROPEAN SEARCH REPORT

**Application Number**

EP 18 15 1190

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 267 532 A1 (ELTA SYSTEMS LTD [IL]) 10 January 2018 (2018-01-10) * paragraphs [0002] - [0004] * * paragraphs [0022] - [0043] * * figures 1A, 1B * * paragraphs [0055] - [0061] * * paragraphs [0068] - [0077] * * paragraph [0084] * * figures 2B, 4, 7A, 7B, 8 * | 1-15 | INV. H01Q3/40 H01Q1/24 H01Q21/06 H01Q25/00 H04B7/06 |
| A | US 2016/134323 A1 (SONY CORP [JP]) 12 May 2016 (2016-05-12) * claims 1, 6, 13 * * paragraph [0008] * * paragraph [0034] * * figures 1A, 1B, 2A * | 1-15 | |
| A | EP 2 566 084 A1 (NTT DOCOMO INC [JP]) 6 March 2013 (2013-03-06) * paragraphs [0014] - [0017] * * figure 1 * | 1-15 | |
| | | | **TECHNICAL FIELDS SEARCHED (IPC)** H01Q H04B |

The present search report has been drawn up for all claims

| Place of search | Date of completion of the search | Examiner |
|---|---|---|
| The Hague | 18 June 2018 | Culhaoglu, Ali |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 1190

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2018

| Patent document cited in search report | | Publication date | Patent family member(s) | | Publication date |
|---|---|---|---|---|---|
| EP 3267532 | A1 | 10-01-2018 | CA | 2970990 A1 | 07-01-2018 |
| | | | EP | 3267532 A1 | 10-01-2018 |
| | | | KR | 20180006294 A | 17-01-2018 |
| | | | SG | 10201705032W A | 27-02-2018 |
| | | | US | 2018013210 A1 | 11-01-2018 |
| US 2016134323 | A1 | 12-05-2016 | CN | 107004955 A | 01-08-2017 |
| | | | EP | 3218962 A1 | 20-09-2017 |
| | | | US | 2016134323 A1 | 12-05-2016 |
| | | | WO | 2016075847 A1 | 19-05-2016 |
| EP 2566084 | A1 | 06-03-2013 | CA | 2797552 A1 | 03-11-2011 |
| | | | CN | 102870360 A | 09-01-2013 |
| | | | EP | 2566084 A1 | 06-03-2013 |
| | | | JP | 5276047 B2 | 28-08-2013 |
| | | | JP | 2011234265 A | 17-11-2011 |
| | | | KR | 20130103332 A | 23-09-2013 |
| | | | US | 2013195035 A1 | 01-08-2013 |
| | | | WO | 2011136331 A1 | 03-11-2011 |

EPO FORM P0459

For more details about this annex : see Official Journal of the European Patent Office, No. 12/82